# EUROPÄISCHE PATENTSCHRIFT

(11) **EP 2 823 167 B1**
(45) Veröffentlichungstag und Bekanntmachung des Hinweises auf die Patenterteilung: **13.04.2016**
(21) Anmeldenummer: 13702432.9
(22) Anmeldetag: 29.01.2013
(51) Int. Cl.: F01P 3/18, B01D 53/86

(54) **KÜHLMODUL**
COOLING MODULE
MODULE DE REFROIDISSEMENT

(30) Priorität: 07.03.2012 DE 102012203608
(43) Veröffentlichungstag der Anmeldung: 14.01.2015
(73) Patentinhaber: Bayerische Motoren Werke Aktiengesellschaft, 80809 München (DE)
(72) Erfinder: STUMPF, Stephan, 80805 München (DE)
(86) Internationale Anmeldenummer: PCT/EP2013/051671
(87) Internationale Veröffentlichungsnummer: WO 2013/131689

(56) Entgegenhaltungen:
- EP-A2- 1 082 990
- WO-A1-01/91890
- DE-A1- 4 007 965
- US-A1- 2005 109 483

## Beschreibung

Die Erfindung betrifft ein Kühlmodul mit den Merkmalen aus dem Oberbegriff des Patentanspruchs 1.

Ein gattungsgemäßes Kühlmodul Ist beispielsweise aus der deutschen Offenlegungsschrift DE 10 2010 011495 A1 bekannt. Aus dieser Schrift, von der die vorliegende Erfindung ausgeht, ist ein Kühlmodul für Kraftfahrzeuge mit mehreren Modulelementen bekannt. Hierbei sind wenigstens ein erstes Modulelement und ein zweites Modulelement In einem Deformationsbereich des Kraftfahrzeuges vorgesehen. Das Modulelement ist dadurch gekennzeichnen, dass wenigstens ein erstes Modulelement gegenüber dem wenigstens zweiten Modulelement verschiebbar ist.

Weiter wird in der Automobilindustrie bisher für SULEV-Zulassungen (Super Ultra Low Emission Vehicle) ausschließlich ein einzelner Wärmetauscher, der Kühlmittelkühler, mit einer "PremAir®"-Beschichtung (Firma BASF) katalytisch wirksam oberflächenbeschichtet, PremAir ist die Bezeichnung für ein beispielsweise von Volvo zwischen 1998 und 2005 verbautes System zur Umwandlung von bodennahem Ozon (drelatomige Sauerstoffmoleküle) in Sauerstoff (zwelatomige Sauerstoffmoleküle). Herfür erhielt der Kühler die o. g. katalytische PremAir®-Beschichtung, die die Ozonmoleküle aufspaltet. Die freien Sauerstoffradikale setzen sich dann wieder zu Sauerstoffmolekülen (O₂) zusammen.

Aufgrund der US-Gesetzesanfordenrungen der EPA (Environmental Protection Agency) bzw. der CARS (California Air Resources Board) ist hierbei ein maximaler credit von 5 mg NMOG (unverbrannte Kohlenwasserstoffe) für sog. DOR-Systeme (Direct Ozon Reduction) erreichbar, wenn das DOR-System direkt Ozon In Sauerstoff konvertiert und dessen Funktion über die OBD (Onboard Diagnose im Fahrzeug) ständig geprüft und vor Manipulationsversuchen geschützt ist.

Angesichts immer kompakterer Bauräume und weiter steigender Sicherheltsanforderungen bei Fahrzeugen, z. B. der passive Fußgangerschutz für den Vorderwagen des Fahrzeuges, verkleinert sich die Stirnfläche der Wärmetauscher bzw. des Kühlmitelkühlers bei Fahrzeugneuentwicklungen derart, dass eine sichere, maximal nach Gesetzgebung mögliche NMOG-Credit-Zielerreichung an ihre physikalische Grenzen stößt. Der Wert der gutzuschreibenden NMOG-Credits errechnet sich u.a. aus der Stirnfläche der beschichteten Wärmetauscheroberfläche sowie der Ozonkonvertierungsrate. Vergrößern sich beide letztgenannten Parameter, vergrößert sich der erreichbare NMOG-Credit In einem zusammengebauten Kühlmodul gibt es zumindest einen weiteren Wärmetauscher, der beschichtet werden kann, z. B. ein Ladeluftkühler. Aufgrund der größeren Bautiefe beilspielsweise eines Ladeluftkühlers Ist eine funkional wirksame Durchbeschichtung mit einer PremAir®-Beschichtung nach heutigem Industriestandard nicht erreichbar und die Erreichung weiterer NMOG-Credits nicht möglich.

Aufgabe der vorliegenden Erfindung ist es, eine Maßnahme aufzuzeigen, um o. g. Nachteile zu vermeiden.

Diese Aufgabe wird durch die Merkmale im kennzeichnenden Teil des Patentanspruchs 1 gelöst.
Erfindungsgemäß wird daher die Gestaltung des zumindest zweiten Wärmetauschers in der Art vorgeschlagen, dass vor finaler Endmontage die blockhaften Wärmetauscher-Netze/-Teilnetze in kleineren, bzw. dünneren Einheiten durchbeschichtet werden. Dies kann durch einen blockhaften Aufbau der Wärmetauschermatrix realisiert werden, die nach dem Zusammenbau dann die finale Systemtiefe abbildet. Hierdurch ist die Zielerreichung maximal möglicher NMOG-Credits im Sinne von Emissionsgutschriften möglich. Die Zielerreichung ist somit auch für künftige Neuprojekte mit sehr angespannten Bauraumverhältnissen gesichert. In vorteilhafter Weise führt die erfindungsgemäße Ausgestaltung zusätzlich zu einer Vergrößerung der Stabilität des Alterungsverhaltens der Beschichtung durch die Vergrößerung der beschichteten Wärmetauscherfläche.

Vorteilhafte Weiterblidungen der Erfindung sind In den Unteransprüchen beschrieben.

Bevorzugt sind die zumindest zwei Teilwärmetauscher getrennt voneinander mit der katalytischen Beschichtung beschichtbar, um eine möglichst 100%Ige Oberflächenbeschichtung und damit einen optimalen Wirkungsgrad zu erhalten.

In einem bevorzugten Ausführungsbeispiel ist der erste Wärmetauscher ein Kühlmittelkühler für eine Brennkraftmaschine oder In einem zweiten Ausführungsbeispiel ein Kondensator für eine Klimaanlage eines Fahrzeuges.

Bevorzugt Ist der zweite Wärmetauscher ein Ladeluftkühler oder ein Abgasrückführkühler, die beide relativ tief bauen, oder ein Niedertemperaturkühler, z. B. für Hybridfahrzeuge.

In einem weiteren besonders bevorzugten Ausführungsbeispiel sind die zumindest zwei Tellwärmetauscher parallel von einem zu kühlenden Fluid durchströmbar und in einem weiteren Ausführungsbeispiel sind sie seriell, d. h. nacheinander von dem zu kühlenden Fluid durchströmbar.

In einer besonders bevorzugten US-Ausführung sind der erste und der zweite Wärmetauscher unlösbar mit dem Rahmen miteinander verbunden, so dass auf einen weiteren OBD-Sensor zur Überwachung der Umsetzung von Ozon In Sauerstoff verzichtet werden kann. Hierzu sind der erste und der zweite Wärmetauscher mit dem Rahmen bevorzugt stoff- und/oder formschlüssig miteinander verbunden.

Als bevorzugte Beschichtung wird eine katalytische Beschichtung verwendet, die Ozonmoleküle, bestehend aus drei Sauerstoffatomen, In Sauerstoffmoleküle, bestehend aus zwei Sauerstoffatomen, aufspaltet.

Besonders bevorzugt wird das erfindungsgemäße Kühlmodul in einem Kraftfahrzeug eingesetzt.

Im Folgenden ist die Erfindung anhand eines besonders bevorzugten Ausführungsbeispieles anhand von zwei Figuren näher erläutert.
- Fig. 1: zeigt eine Aufsicht auf ein erfindungsgemäßes Kühlmodul.
- Fig. 2: zeigt einen Schnitt durch das erfindungsgemäße Kühlmodul.

Im Folgenden gelten in beiden Figuren für gleiche Bauelemente die gleichen Bezugsziffern.

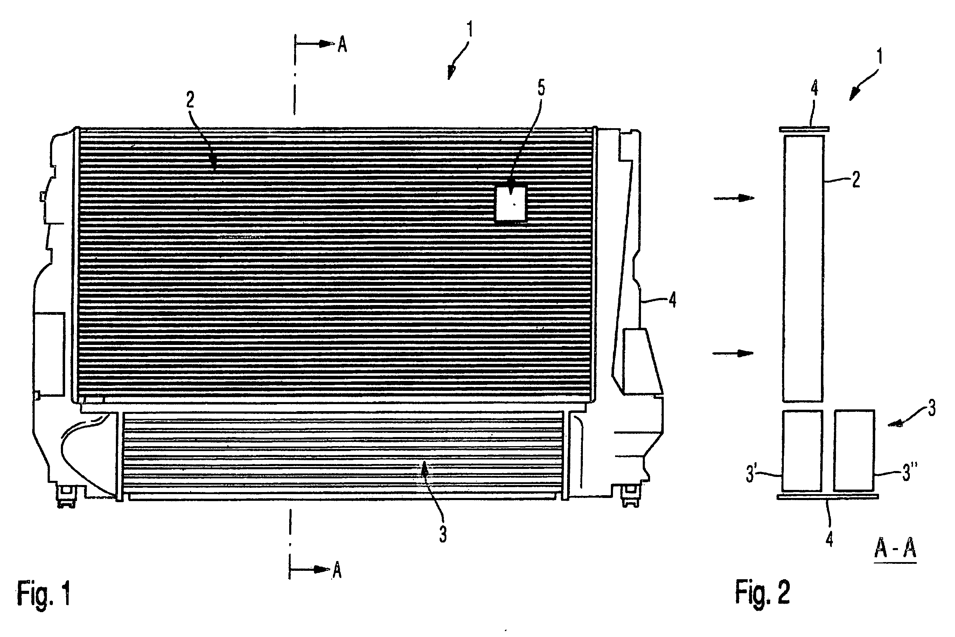

Fig. 1 zeigt eine Aufsicht auf ein erfindungsgemäßes Kühlmodul 1. Das Kühlmodul 1 besteht aus zumindest einem ersten und einem zweiten Wärmetauscher 2, 3, die in einem gemeinsamen Rahmen 4 oder direkt über die Fluidkästen miteinander verbunden sind sind. Beide Wärmetauscher 2, 3 sind in bekannter Weise von einer Kühlluft durchströmbar. Der zweite Wärmetauscher 3 weist in Strömungsrichtung der Kühlluft eine größere Bautiefe auf als der erste Wärmetauscher 2.

Erfindungsgemäß ist das Kühlmodul 1 dadurch gekennzeichnet, dass der erste und der zweite Wärmetauscher 2, 3 eine katalytische Beschichtung aufweisen und der zweite Wärmetauscher 3 aus zumindest einem ersten und einem zweiten in Strömungsrichtung der Kühlluft hintereinander angeordneten, miteinander in Wirkverbindung stehenden Teilwärmetauscher 3', 3" besteht

Zur ständigen Überwachung, bzw. OBD (Onboard Diagnose) der Konvertierungseigenschaften der katalytischen Beschichtung ist auf der Oberfläche des ersten Wärmetauschers 2 ein Sensor 5 unmanipulierbar angeordnet. Um einen maximalen Wirkungsgrad der katalytischen Konvertierung zu erzielen sind die zumindest zwei Teilwärmetauscher 3' 3" getrennt voneinander mit der katalytischen Beschichtung über ihre gesamte Tiefe beschichtbar, um eine 100%ige Oberflächenbeschichtung zu erzielen.

In zwei unterschiedlichen Ausführungsbeispielen der erfindungsgemäßen Ausgestaltung ist der erste Wärmetauscher 2 als ein Kühlmittelkühler für eine Brennkraftmaschine oder als ein Kondensator für eine Klimaanlage eines Fahrzeuges vorgesehen. In zwei weiteren besonders bevorzugten Ausführungsbeispielen ist der zweite Wärmetauscher 3 als ein Ladelufkühler oder ein Abgasrückführkühler oder ein Niedertemperaturkühler ausgebildet.

In wiederum zwei weiteren Ausführungsbeispielen sind die zumindest zwei Teilwärmetauscher 3', 3" entweder parallel oder seriell, d. h. nacheinander von einem zu kühlenden Fluid durchströmbar. Bei diesem zu kühlenden Fluid kann es sich entsprechend den o. g. Konfigurationen um ein Fühlmittel oder ein Kältemittel oder eine Ladeluft oder ein Abgas handeln.

In einer weiteren besonders bevorzugten US-Ausführung sind der erste und der zweite Wärmetauscher 2, 3 unlösbar mit dem Rahmen 4 oder direkt über die Fluldkästen miteinander verbunden. Dies erfolgt In bevorzugter Weise durch eine stoff- und/oder formschlüssige Verbindung. Durch diese Maßnahme kann ein zweiter Sensor 5 am zweiten Wärmetauscher 3 entfallen.

Bei der katalytischen Beschichtung handelt es sich bevorzugt um eine katalytische Beschichtung, die Ozonmoleküle, bestehend aus drei Sauerstoffatomen, aufspaltet, die sich anschließend wieder als Sauerstoffmoleküle, bestehend aus zwei Sauerstoffätomen, verbinden.

Besonders bevorzugt wird das erfindungsgemäße Kühlmodul 1 in einem Kraftfahrzeug verwendet

Fig. 2 zeigt einen in Fig. 1 eingezeichneten Schnitt A-A durch das erfindungsgemäße Kühlmodul 1. Es glit das zu Fig. 1 gesagte.

### Bezugszeichenliste:

- 1.: Kühlmodul
- 2.: erster Wärmetauscher
- 3.: zweiter Wärmtauscher
- 3': erster Tellwärmetauscher
- 3": zweiter Teilwärmetauscher
- 4.: Rahmen
- 5.: Sensor

## Patentansprüche

1. Kühlmodul (1), bestehend aus zumindest einem ersten und einem zweiten Wärmetauscher (2,3), die In einem gemeinsamen Rahmen (4) oder direkt miteinander verbunden sind und wobei beide Wärmetauscher (2, 3) Von einer Kühlluft durchströmbar sind, wobei der zweite Wärmtauscher (3) in Strömungsrichtung der Kühlluft eine größere Bautiefe aufweist als der erste Wärmetauscher (2),
**dadurch gekennzeichnet, dass** der erste und der zweite Wärmetauscher (2, 3) eine katalytische Beschichtung aufweisen und der zweite Wärmetauscher (3) aus zumindest einem ersten und einem zweiten In Strömungsrichtung der Kühlluft hintereinander angeordneten, miteinander in Wirkverbindung stehenden Teilwärmetauscher (3', 3") besteht.

2. Kühlmodul nach Patentanspruch 1,
**dadurch gekennzeichnet, dass** die zumindest zwei Teilwärmtauscher (3', 3") getrennt voneinander mit der katalytischen Beschichtung beschichtbar sind.

3. Kühlmodul nach Patentanspruch 1 oder 2,
**dadurch gekennzeichnet, dass** der erste Wärmetauscher (2) ein Kühlmittelkühler für eine Brennkraftmaschine oder ein Kondensator für eine Klimaanlage eines Fahrzeuges Ist.

4. Kühlmodul nach einem der Patentansprüche 1 bis 3,
**dadurch gekennzeichnet, dass** der zweite Wärmetauscher (3) ein Ladeluftkühler oder ein Abgasrückführkühler oder ein Niedertemperaturkühler ist.

5. Kühlmodul nach einem der Patentansprüche 1 bis 4,
**dadurch gekennzeichnet, dass** die zumindest zwei Teilwärmetauscher (3', 3") parallel oder nacheinander von einem zu kühlenden Fluid durchströmbar sind.

6. Kühlmodul nach einem der Patentansprüche 1 bis 5,
**dadurch gekennzeichnet, dass** der erste und der zweite Wärmetauscher (2,3) unlösbar mit dem Rahmen (4) oder direkt miteinander verbunden sind.

7. Kühlmodul nach Patentanspruch 6,
**dadurch gekennzeichnet, dass** der erste und der zweite Wärmetauscher (2,3) mit dem Rahmen (4) stoff- und/oder form schlüssig miteinander verbunden sind.

8. Kühlmodul nach einem der Patentansprüche 1 bis 7,
**dadurch gekennzeichnet, dass** die katalytische Beschichtung Ozonmoleküle, bestehend aus drei Sauerstoffatomen, aufspaltet.

9. Kraftfahrzeug mit einem Kühlmodul nach einem der Patentansprüche 1 bis 8.

## Claims

1. A cooling module (1), comprising at least a first and a second heat exchanger (2, 3) which are interconnected in a common frame (4) or are directly interconnected and wherein cooling air can flow through the two heat exchangers (2, 3), wherein the second heat exchanger (3) has a greater construction depth than the first heat exchanger (2) in the direction of flow of the cooling air,
**characterised in that** the first and the second heat exchangers (2, 3) have a catalytic coating and the second heat exchanger (3) comprises at least a first and a second partial heat exchanger (3', 3") which are arranged in tandem in the direction of flow of the cooling air and are operatively interconnected.

2. A cooling module according to claim 1,
**characterised in that** the at least two partial heat exchangers (3', 3") can be coated with the catalytic coating separately from one another.

3. A cooling module according to claim 1 or claim 2,
**characterised in that** the first heat exchanger (2) is a coolant cooler for an internal combustion engine or a condenser for an air conditioning system of a vehicle.

4. A cooling module according to any one of claims 1 to 3,
**characterised in that** the second heat exchanger (3) is an intercooler or an exhaust gas recirculation cooler or a low-temperature cooler.

5. A cooling module according to any one of claims 1 to 4,
**characterised in that** a fluid to be cooled can flow through the at least two partial heat exchangers (3', 3") in parallel or in succession.

6. A cooling module according to any one of claims 1 to 5,
**characterised in that** the first and the second heat exchangers (2, 3) are unreleasably interconnected by the frame (4) or are directly interconnected.

7. A cooling module according to claim 6,
**characterised in that** the first and the second heat exchangers (2, 3) are interconnected by the frame (4) in an integral and/or form-locking manner.

8. A cooling module according to any one of claims 1 to 7,
**characterised in that** the catalytic coating splits ozone molecules, consisting of three oxygen atoms.

9. A motor vehicle having a cooling module according to any one of claims 1 to 8.

## Revendications

1. Module de refroidissement (1) constitué d'au moins un premier et un second échangeur de chaleur (2,3) qui sont reliés dans un cadre commun (4) ou directement entre eux, dans lequel les deux échangeurs de chaleur (2,3) peuvent être traversés par de l'air de refroidissement et le second échangeur de chaleur (3) a dans la direction d'écoulement de l'air de refroidissement une profondeur de structure supérieure à celle du premier échangeur de chaleur (2),
**caractérisé en ce que**
le premier et le second échangeur de chaleur (2,3) ont un revêtement catalytique, et le second échangeur de chaleur (3) est constitué d'au moins un premier et un second échangeur de chaleur partiels (3', 3") montés l'un derrière l'autre dans la direction d'écoulement de l'air de refroidissement et qui sont en liaison fonctionnelle l'un avec l'autre.

2. Module de refroidissement conforme à la revendication 1,
**caractérisé en ce que**
les deux échangeurs de chaleur partiels (3', 3 ") peuvent être recouverts par le revêtement catalytique, séparément l'un de l'autre.

3. Module de refroidissement conforme à la revendication 1 ou 2,
**caractérisé en ce que**
le premier échangeur de chaleur (2) est un refroidisseur de fluide de refroidissement pour un moteur à combustion interne ou un condensateur pour une installation de climatisation d'un véhicule.

4. Module de refroidissement conforme à l'une des revendications 1 à 3,
**caractérisé en ce que**
le second échangeur de chaleur (3) est un refroidisseur de la charge ou un refroidisseur de retour des gaz d'échappement ou un refroidisseur basse terripérature.

5. Module de refroidissement conforme à l'une des revendications 1 à 4,
**caractérisé en ce que**
les deux échangeurs de chaleur partiels (3', 3") peuvent être traversés parallèlement ou l'un après l'autre par un fluide à refroidir.

6. Module de refroidissement conforme à l'une des revendications 1 à 5,
**caractérisé en ce qu**
le premier et le second échangeurs de chaleur (2,3) sont reliés de manière inamovible avec le cadre (4) ou directement l'un avec l'autre.

7. Module de refroidissement conforme à la revendication 6,
**caractérisé en ce que**
le premier et le second échangeurs de chaleur (2,3) sont reliés entre eux avec le châssis (4) par une liaison par la matière et/ou par la forme.

8. Module de refroidissement conforme à l'une des revendications 1 à 7,
**caractérisé en ce que**
le revêtement catalytique sépare des molécules d'ozone, constituées par trois atomes d'oxygène.

9. Véhicule équipé d'un module de refroidissement conforme à l'une des revendications 1 à 8.
